(19) Europäisches Patentamt
European Patent Office
Office européen des brevets

(11) **EP 3 311 080 B1**

(12) **EUROPÄISCHE PATENTSCHRIFT**

(45) Veröffentlichungstag und Bekanntmachung des Hinweises auf die Patenterteilung:
**29.07.2020  Patentblatt 2020/31**

(51) Int Cl.:
*F24S 23/77* (2018.01)    *F24S 25/00* (2018.01)
*H02S 20/20* (2014.01)    *H02S 40/22* (2014.01)

(21) Anmeldenummer: **16728618.6**

(22) Anmeldetag: **13.06.2016**

(86) Internationale Anmeldenummer:
**PCT/EP2016/000977**

(87) Internationale Veröffentlichungsnummer:
**WO 2016/202446 (22.12.2016 Gazette 2016/51)**

(54) **VERFAHREN ZUR ERHÖHUNG DES ERTRAGS VON SOLARKOLLEKTOREN**

METHOD FOR INCREASING THE YIELD OF SOLAR COLLECTORS

PROCÉDÉ D'AUGMENTATION DU RENDEMENT DE COLLECTEURS SOLAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2015  DE 102015007792**

(43) Veröffentlichungstag der Anmeldung:
**25.04.2018  Patentblatt 2018/17**

(73) Patentinhaber: **Scholl, Klaus**
**67685 Weilerbach (DE)**

(72) Erfinder: **Scholl, Klaus**
**67685 Weilerbach (DE)**

(74) Vertreter: **Kesselhut, Wolf**
**Reble & Klose**
**Rechts- und Patentanwälte**
**Konrad-Zuse-Ring 32**
**68163 Mannheim (DE)**

(56) Entgegenhaltungen:
**DE-A1-102005 038 327    DE-A1-102009 042 092**
**US-A- 4 674 244    US-A1- 2014 238 387**

EP 3 311 080 B1

**Beschreibung**

Die Erfindung betrifft ein Verfahren zur Erhöhung des Ertrags von Solarkollektoren gemäß dem Oberbegriff von Anspruch 1.

Für moderne photovoltaische oder thermische Solarkollektoren, die nachfolgend allgemein als Solarkollektoren bezeichnet werden, gibt es eine Vielzahl von Methoden und Techniken zur Leistungssteigerung. Bekannt sind unter anderem Techniken zur Nachführung der Solarkollektoren, die Verwendung von Solarkollektoren mit integrierten Sammellinsen, sowie die Anbringung von Reflektoren direkt an den jeweiligen Modulen oder getrennt von diesen. Diese Reflektoren ermöglichen oft erst eine Installation von Solarkollektoren auf von der Sonne abgewandten oder bei nicht optimal in Südrichtung ausgerichteten Solarkollektoren.

Die Nachführung von Solarkollektoren zur Steigerung der erzeugten Leistung ist mit erheblichen Mehrkosten für das Ständerwerk, den Antrieb und die Regelung verbunden; und Solarkollektoren mit integrierten Sammellinsen sind aufwendig und kostenintensiv in der Herstellung. Diese beschriebenen Techniken sind in der Regel nicht nachrüstbar.

Demgegenüber bieten zusätzlich oder nachträglich montierte Reflektoren eine kostengünstige und einfache Art der Leistungssteigerung ohne Beeinträchtigung der Garantien für die bestehende oder neu zu installierende Photovoltaikanlage.

Ein solcher Reflektor ist beispielsweise aus der DE 10 2008 055 871 A1 bekannt und umfasst einen Spiegel, der verschwenkbar an einem seitlichen Rand des PV-Modules angeordnet ist.

Aus der EP 0230 227 A2 ist weiterhin eine Solaranlage mit ebenflächigen Solarmodulen in einem Kollektorfeld bekannt, an deren Rändern teilweise ein oder mehrere ebene Spiegelflächen in einem Winkel zu den Solarmodulen angeordnet sind, wobei die auf die Spiegelflächen auftreffende Sonnenstrahlung auf die Solarmodule reflektiert wird. Die Spiegelflächen und die Solarmodule sind dabei starr auf dem Dach eines Gebäudes oder auf Tragelementen angeordnet.

Die bekannten Reflektoren werden entweder als Sammelreflektor, als parallele Spiegel oder, wie in der DE 10 2009 033 771 A1 beschrieben, als diffuse Reflektoren ausgestaltet. Sammelreflektoren haben dabei den Nachteil die angestrahlten Solarkollektoren nicht gleichmäßig auszuleuchten, was bekanntermaßen zu dem Nachteil führt, dass der Solarkollektor keine Leistungssteigerung erbringt, da die abgegebene Leistung von der schwächsten in Reihe geschalteten Solarzelle bestimmt wird. Reflektoren sind dabei durch ihre Freiheitsgrade im Wesentlichen in zwei verschiedene Ausführungsformen zu unterteilen. Zum einen fest installierte Reflektoren unter einem vorgegebenen Winkel und zum anderen winkelvariable Reflektoren. Die winkelvariablen Reflektoren ermöglichen in der Regel eine Einstellung des Elevationswinkels und teilweise auch des Azimutwinkels gegenüber den Solarkollektoren, wie in der DE 10 2009 033 771 A1 gezeigt.

Aus der WO 2011/067772 A1 sind Solarkollektoren mit daran aufgenommenen Solarreflektoren bekannt, welche in Reihen auf einem Träger aufgenommen und zu Gruppen zusammengefasst sind, welche auf einem drehbaren Grundgestellt angeordnet sind. Dabei ergibt sich der Nachteil, dass das Trägergestellt sehr komplex und stabil ausgeführt sein muss, um die Solarkollektoren und -reflektoren auch bei hohen Windlasten sicher zu tragen.

Aus der EP 2 075 853 A2 ist eine Solarkollektoranordnung mit Reflektor bekannt, die unter einem festen Winkel fest montiert sind, oder alternativ auf einem schwenkbaren Rahmen angeordnet sind, welcher entweder manuell oder automatisch der Sonne nachgeführt wird. Die einzelnen Module sind dabei auf einem Balken oder Träger angeordnet, welcher um seine Längsachse gedreht werden kann. Hierdurch muss der Tragrahmen in den Drehgelenken sehr aufwendig und stabil ausgeführt sein, da diese die Last der Solarkollektoren und Reflektoren tragen müssen. Bei der Anordnung ist eine Verstellung des Reflektorwinkels nicht vorgesehen; und es wird kein Hinweis gegeben, wie der Winkel zwischen Reflektor und Kollektor zu wählen ist.

Aus der US 4,674,244 ist eine Anordnung bekannt, die ein PV-Modul mit einer Kollektorfläche und einen Reflektor umfasst, der nahe der Kollektorfläche entlang der zentralen Längsachse gegenüber der Horizontalen um einen Elevationswinkel geneigt ist und einen vom Sonnenstand abhängigen Anteil des auf den Reflektor auftreffenden Sonnenlichts auf die Kollektorfläche reflektiert.

Die Einstellung dieser Reflektionswinkel ist von einer Vielzahl von Einflussfaktoren abhängig, wie z.B. von der horizontalen Ausrichtung der Solaranlage gegenüber der Nord-Süd-Achse (Azimutwinkel), dem Elevationswinkel der Solarmodule und dem jahreszeitlichen Sonnenstandsverlauf. Obgleich den fünf zuvor genannten Dokumenten zu entnehmen ist, dass der jeweilige Winkel, in welchem die Reflektorfläche gegenüber der Kollektorfläche angeordnet ist, entsprechend der Jahreszeit verändert wird, um eine optimale Energieausbeute zu erhalten, geben die Schriften keinen Hinweis darauf, den Winkel in der Weise fest zu wählen, dass über einen vorgegebenen längeren Zeitraum, insbesondere über ein Jahr hinweg, ein maximaler Ertrag erhalten wird.

Demgemäß ist es eine Aufgabe der vorliegenden Erfindung, ein Verfahren zu schaffen, mit welchem sich ein Reflektor optimal gegenüber einem Solarkollektor in der Weise anordnen lässt, dass der Ertrag über einen längeren Zeitraum, insbesondere ein Jahr hinweg, maximal ist.

Diese Aufgabe wird erfindungsgemäß durch die Merkmale von Anspruch 11 gelöst.

Weitere Merkmale der Erfindung sind in den Unteransprüchen beschrieben.

Nach dem erfindungsgemäßen Verfahren zur Erhöhung des von einem Solarkollektor über einen vorgegebenen Betrachtungszeitraum hinweg erzeugten Ertrags weist der Solarkollektor eine durch Sonnenlicht beaufschlagte Kollektorfläche auf. Diese Kollektorfläche ist gegenüber der Horizontalen um einen ersten Elevationswinkel geneigt und relativ zur Nord-Südrichtung um einen Azimutwinkel gedreht. Gegenüber der Kollektorfläche ist weiterhin ein gegenüber der Horizontalen um einen zweiten Elevationswinkel geneigter Reflektor angeordnet, welcher einen vom Sonnenstand abhängigen Anteil des auf den Reflektor auftreffenden Sonnenlichts auf die Kollektorfläche reflektiert, wobei der zweite Elevationswinkel des Reflektors während eines Betrachtungszeitraums fest ist.

Das erfindungsgemäße Verfahren zeichnet sich dadurch aus, dass der zweite Elevationswinkel in Abhängigkeit vom geografischen Aufstellungsort des Solarkollektors und der Größe des ersten Elevationswinkels und Azimutinkels in der Weise fest für einen vorgegebenen Betrachtungszeitraum gewählt wird, dass die Summe der in aufeinanderfolgenden Betrachtungsintervallen über den Betrachtungszeitraum hinweg aufsummierten Produkte aus dem je Betrachtungsintervall auf die Kollektorfläche reflektierten Anteil des Sonnenlichts und einem dem Solarkollektor zugeordneten Ertragswert maximal ist, wobei der Ertragswert der gemessene oder simulierte Mittelwerte der lokalen Erträge in dem jeweiligen Betrachtungsintervall am geografischen Ort des Solarkollektors in wenigstens zwei vorhergehenden Jahren ist. Das erfindungsgemäße Verfahren besitzt den Vorteil, dass ein Maximum des durch den Reflektor zusätzlich bereitgestellten Energiebetrags über einen längeren Zeitraum hinweg, insbesondere drei Monate, vorzugsweise fünf bis sieben Monate, besonders bevorzugt acht Monate bis zu einem Jahr, erhalten wird, ohne den Winkel in mechanisch aufwendiger Weise kontinuierlich dem Sonnenstand entsprechend nachjustieren zu müssen. Anders ausgedrückt ist der Winkel des Reflektors während des Betrachtungszeitraums fest eingestellt.

Die mit der Erfindung erzielten Vorteile sind eine optimale einmalige mechanische Ausrichtung des Reflektors gegenüber dem Solarkollektor unter Berücksichtigung standortbezogener Parameter. Dabei ist es eine besondere Herausforderung, die nötigen Parameter zur Berechnung des optimalen Winkels zu bestimmen. Durch die Vielzahl an Einflussfaktoren und deren Komplexität erfolgt die Einstellung der Reflektoren üblicherweise aufgrund von Erfahrungswerten oder überschlägigen Abschätzungen. Die Vorteile der Erfindung liegen insbesondere in der drastischen Reduzierung, Vereinfachung und Automatisierung der Berechnung, der Einbeziehung von Sonnenstandmodellen und der kostengünstigen Ausgestaltung des Reflektors. Darüber hinaus kann die Erfindung weiterhin auch bei Bestandsanlagen mit geringen Kosten und Aufwand ohne Beeinträchtigung der bestehenden Garantien nachträglich zur Leistungssteigerung eingesetzt werden, um deren Wirtschaftlichkeit weiter zu steigern. Hierbei wurde von der Anmelderin gefunden, dass sich der Ertrag durch die Montage eines kostengünstigen Reflektors an einem Aufstellungsort im Südwesten von Deutschland durch den Einsatz des erfindungsgemäßen Verfahrens um bis zu 26% steigern lässt. Gemäß der Erfindung wird die Größe des zweiten Elevationswinkels durch folgende Verfahrensschritte bestimmt. Zunächst wird der Wert für die Länge des Reflektors vorgegeben, insbesondere berechnet. Dieser ist abhängig von den örtlichen und baulichen Gegebenheiten der Anlage, wie z.B. dem Reihenabstand, einem ggf. vorhandenen Fahrweg zwischen den Reihen oder einer etwaigen Hanglage. Daraufhin wird ein jahreszeitlicher Anfangs und Endwert sowie das Betrachtungsintervall für den Betrachtungszeitraum definiert. In der Regel sind dies bei einer tagesbezogenen Betrachtung für eine ausreichend genaue Berechnung in Deutschland die Monate März bis Oktober, d.h. ein Betrachtungszeitraum von vorzugsweise 8 Monaten. Weiterhin wird der Anfangs- und Endwert des zweiten Elevationswinkels und das Intervall für die Änderung des Winkels festgelegt. Vorzugsweise liegt der Anfangswert zwischen 0° und 20°, der Endwert zwischen 20° und 45° und das Intervall bevorzugt bei 1°. Alternativ kann das Intervall zur Erhöhung der Genauigkeit auch in 0,1° Schritte unterteilt werden.

Im nachfolgenden Verfahrensschritt wird der tageszeitliche Anfangswert und Endwert für einen Unterbetrachtungszeitraum mit dem Unterbetrachtungsintervall festgelegt. Wie von der Anmelderin gefunden wurde, sind dabei als Anfangswert der Sonnenaufgang und als Endwert der Sonnenuntergang mit einem Intervall von einer Stunde, ggf. auch 30 Minuten oder weniger, ausreichend. Im Anschluss daran werden einem jeden Betrachtungsintervall, insbesondere ein Tag, mittlere Ertragswerte vorzugsweise in der Einheit kWh/kWp zugeordnet. Hierbei bezeichnet kWp die Leistung des oder der betroffenen Solarmodule. Die Daten kWh/kWp stammen vorzugsweise aus regional benachbarten Solaranlagen, können aber auch aus mathematischen Modellen abgeleitet werden.

Hierbei werden iterativ, z.B. auf einem Rechner, folgende Schritte für alle Intervalle im vorgegebenen Bereich des zweiten Elevationswinkels zwischen Anfangs- und Endwert mit einer vorgegebenen Schrittweite durchgeführt. Für das jeweilige Betrachtungsintervall werden die Werte für den reflektierten Anteil dann für einen jeden im Intervall liegenden Wert in definierten Schritten gebildet. Dazu wird der für den zweiten Elevationswinkel vom Reflektor auf den Solarkollektor reflektierte mittlere Anteil des Sonnenlichts in diesem Betrachtungsintervall in Abhängigkeit vom Sonnenstand im Unterbetrachtungszeitraum aufaddiert und der erhaltene Wert mit einem diesem Betrachtungsintervall zugeordneten Wert für den mittleren Ertrag für den Solarkollektor im Betrachtungszeitraum multipliziert. Aus den so erhaltenen gewichteten Ertragswerten wird über den gesamten Betrachtungszeitraum hinweg im Anschluss daran der Mittelwert bestimmt und der dem jeweiligen zweiten Elevationswinkel zugeordnete Gesamtwert für den Ertrag im vorgegebenen Betrachtungszeitraum ermittelt. Als nächstes wird der Wert für den zweiten Elevationswinkel um das vorgegebene Intervall für den zweiten Elevationswinkel erhöht, bzw. erniedrigt und der nächste Gesamtwert für den Ertrag, der diesem Wert für den zweiten Elevationswinkel zugeordnet ist, durch eine erneute Ausführung des vorhergehenden Verfahrensschritts bestimmt. Die zuvor beschriebenen Verfahrensschritte werden solange wiederholt, bis der zu Anfang vorgegeben Endwert für den zweiten Elevationswinkel erreicht ist.

Im Anschluss daran wird aus den ermittelten Gesamtwerten für den Ertrag das Maximum und der zu diesem Maximum gehörende Wert für den zweiten Elevationswinkel bei dem gewählten Wert für die Reflektorlänge bestimmt, der nachfolgend auch als optimaler zweiter Elevationswinkel bezeichnet wird.

Bei der zuvor beschriebenen Ausführungsform der Erfindung erfolgt das Vorgeben des mittleren Ertrages am Aufstellungsort des Solarkollektors anhand von Daten bestehender, räumlich naher PV-Anlagen oder, bei Neuinstallationen, mit Hilfe von marktüblichen Berechnungswerkzeugen und/oder Programmen im Betrachtungszeitraum, vorzugsweise in Intervallen von einem Tag. Durch diese Art der Datenerhebung ergibt sich der Vorteil, dass auch bei Anlagen, die bislang noch nicht errichtet sind, der optimale zweite Elevationswinkel und die gewünschtenfalls optimale Größe für einen zusätzlichen Reflektor berechnet werden können. Bei bereits bestehenden Anlagen kann die Berechnung des optimalen zweiten Elevationswinkels dabei mit sehr hoher Genauigkeit erfolgen, was einen zusätzlichen Vorteil darstellt, da - wie von der Anmelderin gefunden wurde - bereits kleine Abweichungen vom optimalen zweiten Elevationswinkel zu einer beachtenswerten Verringerung des zusätzlichen Ertrags führen.

Bei der bevorzugten Ausführungsform der Erfindung wird danach auf der Basis des zuvor ermittelten größten Gesamtwerts die relative Erhöhung des vom Solarkollektor im vorgegebenen Betrachtungszeitraum erzeugten Ertrags bestimmt und vorzugsweise als prozentuale Erhöhung beispielsweise auf dem Bildschirm eines Rechners ausgegeben. Durch diese Art der Normierung ergibt sich der Vorteil, quantitative Aussagen zur Leistungssteigerung durch die Anwendung des erfindungsgemäßen Verfahrens für einen bereits installierten oder geplanten Solarreflektor treffen zu können.

Nach einem weiteren der Erfindung zugrunde liegenden Gedanken ist die Größe eines Betrachtungsintervalls ein Tag, und/oder die Größe des Unterbetrachtungszeitraums eine Stunde. Weiterhin sind die für ein jedes Betrachtungsintervall herangezogenen mittleren Erträge die gemessenen oder simulierten Mittelwerte der lokalen Erträge in dem jeweiligen Betrachtungsintervall am geografischen Ort des Solarkollektors in wenigstens zwei vorhergehenden Jahren.

Nach einem weiteren der Erfindung zugrunde liegenden Gedanken beträgt die Größe des Intervalls für den zweiten Elevationswinkel, um das dieser bei der Anwendung des erfindungsgemäßen Verfahrens variiert wird, insbesondere 1°.

Wie von der Anmelderin anhand von Simulation gefunden wurde, ergibt sich hierdurch eine hinreichend genaue Berechnung des optimalen zweiten Elevationswinkels, die im Rahmen der mechanischen Einstellungsgenauigkeit liegt, mit der sich der Reflektor gegenüber dem Kollektor ausrichten lässt.

Gemäß einer weiteren Ausführungsform der Erfindung ist entlang der zentralen Längsachse der Kollektorfläche ein weiterer, um einen ersten Elevationswinkel gegenüber der Horizontalen geneigter Solarkollektor angeordnet. Der Seitenrand des Solarkollektors ist gegenüber dem zugewandten Seitenrand des weiteren Solarkollektors in einem vorgegebenen lichten Abstand angeordnet.

Dies bietet den Vorteil, die Größe und den optimalen Elevationswinkel eines Reflektors auch bei bereits vorhandenen Solaranlagen anhand von baulichen Gegebenheiten am Aufstellungsort berechnen zu können.

Bei der zuvor beschriebenen Ausführungsform der Erfindung wird zur Bestimmung des zweiten Elevationswinkels zusätzlich die Länge des Reflektors in vorgegebenen Schritten variiert, insbesondere in Schritten von 5 Zentimetern.

Bei einer besonders eleganten Ausführungsform der Erfindung wird hierzu die Länge des Reflektors zwischen einer maximalen Länge und einer minimalen Länge des Reflektors in vorzugsweise gleichmäßigen Schritten, vorzugsweise in 5 cm Schritten, verändert, wobei die maximale Länge des Reflektors und die minimale Länge des Reflektors nach folgender Beziehung ermittelt werden:

$$L_{Rmax} = a - ( L_{Koll} * \sin (\alpha_{Koll}) ) / \tan (\alpha_{S06})$$

oder bei einem an einer Steigung (Hang) angeordneten Solarkollektor

$$L_{Rmax} = a - ( L_{Koll} * \sin (\alpha_{Koll}) - h_S ) / \tan (\alpha_{S06})$$

oder bei einem an einem Gefälle (Hang) angeordneten Solarkollektor

4

$$L_{Rmax} = a - ( L_{Koll} * \sin (\alpha_{Koll}) + h_G ) / \tan (\alpha_{S06})$$

und

$$L_{Rmin} = a - ( L_{Koll} * \sin (\alpha_{Koll}) ) / \tan (\alpha_{S03})$$

oder bei einem an einer Steigung (Hang) angeordneten Solarkollektor

$$L_{Rmin} = a - ( L_{Koll} * \sin (\alpha_{Koll}) - h_S ) / \tan (\alpha_{S03})$$

oder bei einem an einem Gefälle (Hang) angeordneten Solarkollektor

$$L_{Rmin} = a - ( L_{Koll} * \sin (\alpha_{Koll}) + h_G ) / \tan (\alpha_{S03})$$

Hierbei bedeuten $L_{Rmax}$ die maximale Länge des Reflektors, $L_{Rmin}$ die minimale Länge des Reflektors, a der lichte Abstand zwischen den Kollektoren, $L_{Koll}$ die Länge des Kollektors bzw. Modultischs, $\alpha_{Koll}$ der Elevationswinkel der Kollektorfläche, $\alpha_{S06}$ der Winkel der Sonne bei höchstem Sonnenstand am geographischen Aufstellungsort, in Deutschland insbesondere der 21. Juni und $\alpha_{S03}$ der größte Höhen-, bzw. Zenit-Winkel der Sonne bei niedrigster täglicher Kreisbahn am Anfang des Betrachtungszeitraumes, bei dem keine Abschattung der Kollektorfläche stattfindet. Die Anmelderin hat für den Beginn des Betrachtungszeitraumes in Deutschland beispielhaft den 15. März eines jeden Jahres gewählt. Weiterhin bezeichnet $h_S$ die Höhe, um die der weitere Solarkollektor gegenüber dem zugewandten Rand des Solarkollektors aufgrund der Steigung erhöht ist ; und $h_G$ ist die Höhe, um die der weitere Solarkollektor gegenüber dem zugewandten Rand des Solarkollektors aufgrund des Gefälles erniedrigt ist.

Dies bietet den Vorteil, dass die Kosten eines Reflektors und der durch diesen Reflektor erzielte zusätzliche Ertrag in Relation gestellt werden können, wodurch eine Auswahl eines wirtschaftlich optimalen Reflektors ermöglicht wird.

Nach einem weiteren der Erfindung zugrunde liegenden Gedanken kann der vom Reflektor auf den Solarkollektor reflektierte mittlere Betrag des Sonnenlichts für den Betrachtungszeitraum unter Zuhilfenahme eines Sonnenstandmodells ermittelt werden. Dies bietet den Vorteil, eine sehr detaillierte und hohe Auflösung bei der Berechnung des vom Reflektor reflektierten Sonnenlichts zu erreichen, die vorzugsweise auf einem elektronischen Rechner durchgeführt wird.

Nach einer weiteren Ausführungsform der Erfindung ist der Reflektor ein mit einer Licht reflektierenden Folie auf einem Trägermaterial, insbesondere ein bespannter Rahmen und/oder ein insbesondere poliertes Metallblech, welcher/welches vorzugsweise an einem vom Solarkollektor unabhängigen Gestell aufgenommen ist. Alternativ können auch Glasspiegel als Reflektor eingesetzt werden. Die zuvor beschriebene Rahmenkonstruktion ist kostengünstig in der Herstellung und aufgrund des geringen Gewichts - sofern die baulichen Vorschriften dies zulassen - einfach an vorhandenen Solarmodulen und deren Trägern zu installieren. Alternativ kann der Reflektor auf freistehenden Gestellen, die vorzugsweise mit Erdspießen am Boden verankert werden, ohne massiv ausgeführte Fundamente installiert werden.

Die Erfindung wird nachfolgend unter Bezugnahme auf die Zeichnung anhand einer bevorzugten Anordnung zur Durchführung des erfindungsgemäßen Verfahrens beschrieben. In der Zeichnung zeigt:

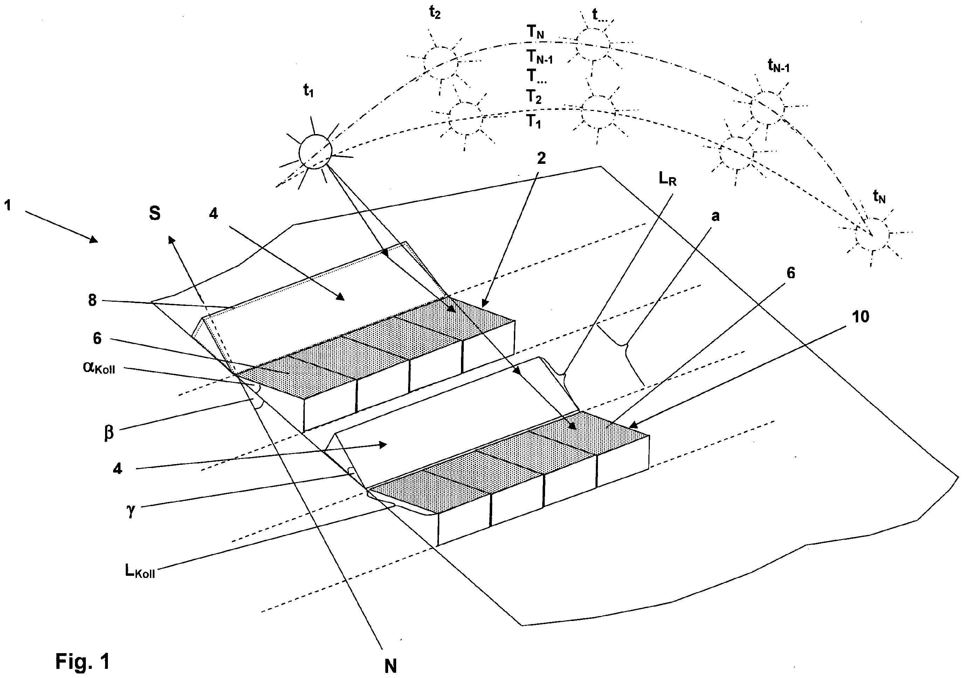

Figur 1:   Eine schematische räumliche Darstellung einer Anordnung umfassend zwei Reihen von benachbarten Solarkollektoren mit jeweils zugeordneten Reflektoren.

Wie in Figur 1 gezeigt ist, umfasst eine bevorzugte Ausführungsform der Anordnung 1 eine erste Reihe von Solarkollektoren 2 sowie in einem lichten Abstand a zu diesen angeordnete zweite Reihe von weiteren Solarkollektoren 10, die jeweils eine Länge $L_{Koll}$ von z.B. 1,6 m aufweisen und eine Kollektorfläche 6 besitzen, die in bekannter Weise aus photovoltaischen Solarzellen besteht. Die durch das Licht der schematisch angedeuteten Sonne beaufschlagte Kollektorfläche 6 ist gegenüber der Horizontalen um einen ersten Elevationswinkel $\alpha_{Koll}$ geneigt und relativ zur Nord-Südrichtung N, S um einen Azimutwinkel $\beta$ gedreht.

Den Solarkollektoren 2, 10 gegenüberliegend ist jeweils ein vorzugsweise durchgängiger Reflektor 4 angeordnet, der gegenüber der Horizontalen um einen zweiten Elevationswinkel $\gamma$ geneigt ist, und der einen vom Sonnenstand abhängigen Anteil des auf den Reflektor 4 auftreffenden Sonnenlichts auf die Kollektorfläche 6 der gegenüberliegenden Solarkollektoren 2, 10 reflektiert. Vorzugsweise umfasst jeder der Reflektoren 4 einen durch gepunktete Linien angedeuteten Rahmen 8, der mit einer Licht reflektierenden, vorzugsweise spiegelnden Folie bespannt ist. Alternativ kann auf dem Rahmen 8 auch ein vorzugsweise poliertes Metallblech mit einer Dicke von z.B. 0,1 bis 2 mm befestigt sein. Der Rahmen 8 ist vorzugsweise an einem vom Solarkollektor unabhängigen, nicht näher bezeichneten Gestell aufgenommen.

Die Größe des zweiten Elevationswinkel y ist für jeden Reflektor 4 über eine in der Zeichnung nicht näher dargestellte mechanische Verstelleinrichtung manuell einstellbar.

Durch Verstellen der Verstelleinrichtung eines jeden Reflektors 4 wird der zweite Elevationswinkel $\gamma$, d.h. der Neigungswinkel des Reflektors 4 in Abhängigkeit vom geografischen Aufstellungsort des Solarkollektors 2 und der Größe der Winkel $\alpha$, $\beta$ in der Weise fest eingestellt, dass die Summe der in aufeinanderfolgenden Unterbetrachtungsintervallen $t_1 \ldots t_N$ über einen vorgegebenen Betrachtungszeitraum $T_1$ bis $T_N$ hinweg aufsummierten Produkte aus dem je Betrach-tungsintervall $T_1 \ldots T_N$ auf die Kollektorfläche 6 reflektierten Anteil des Sonnenlichts und einen dem Solarkollektor 2 zugeordneten Ertragswert maximal ist. Der Sonnenverlauf zu den jeweiligen Betrachtungsintervallen $T_1$, $T_2$, bis $T_N$ und der Sonnenstand zu den Unterbetrachtungsintervallen $t_1$, $t_2$, bis $t_N$ ist in Fig. 1 zum leichteren Verständnis symbolisch in gestrichelten Linien angedeutet.

Liste der Bezugszeichen

1 Anordnung zum Durchführen des erfindungsgemäßen Verfahrens

2 Solarkollektor

4 Reflektor

6 Kollektorfläche

8 Trägerrahmen

10 Weiterer Solarkollektor

a Lichten Abstand

$E_{T1\ldots TN}$ Mittleren Ertrag

$E_{V\gamma1,T1\ldots\gamma N,TN}$ Verstärkter Ertragswerte

$E_{VM\gamma1\ldots VM\gamma N}$ Gesamtwert

$E_{VM,\gamma max}$ Größter Gesamtwert

$L_{Koll}$ Kollektorlänge

$L_R$ Reflektorlänge

$L_{Rmax}$ Maximale Reflektorlänge

$L_{Rmin}$ Minimale Reflektorlänge

$\Delta L_R$ Änderung der Reflektorlänge

$\alpha_{Koll}$ Erster Elevationswinkel

$\beta$ Azimutwinkel

$\gamma_{1...N}$ Zweiter Elevationswinkel

$\gamma_{max}$ Größtem Gesamtwert ($E_{VM,\gamma max}$) zugeordneter zweiter Elevationswinkel

$\Delta\gamma$ Änderung des zweiten Elevationswinkels

$T_{1...N}$ Betrachtungszeitraum

$\Delta T$ Betrachtungsintervalle

$t_{1...N}$ Unterbetrachtungszeitraum

$\Delta t$ Unterbetrachtungsintervall

S Süden

N Norden

**Patentansprüche**

1. Verfahren zur Erhöhung des von einem Solarkollektor (2) über einen vorgegebenen Betrachtungszeitraum ($T_1$ bis $T_N$) hinweg erzeugten Ertrags, wobei der Solarkollektor (2) eine durch Sonnenlicht beaufschlagte Kollektorfläche (6) aufweist, die gegenüber der Horizontalen um einen ersten Elevationswinkel ($\alpha$) geneigt und relativ zur Nord-Südrichtung (N, S) um einen Azimutwinkel ($\beta$) gedreht ist, und wobei gegenüber der Kollektorfläche (6) ein gegenüber der Horizontalen um einen zweiten Elevationswinkel ($\gamma$) geneigter Reflektor (4) angeordnet ist, welcher einen vom Sonnenstand abhängigen Anteil des auf den Reflektor (4) auftreffenden Sonnenlichts auf die Kollektorfläche (6) reflektiert, wobei der zweite Elevationswinkel ($\gamma$) fest eingestellt ist, **dadurch gekennzeichnet, dass** der zweite Elevationswinkel ($\gamma$) in Abhängigkeit vom geografischen Aufstellungsort des Solarkollektors (2) und der Größe des ersten Elevationswinkels ($\alpha$) und des Azimutwinkels ($\beta$) in der Weise gewählt ist, dass die Summe der in aufeinanderfolgenden Betrachtungsintervallen über einen vorgegebenen Betrachtungszeitraum ($T_1$) bis ($T_N$) hinweg aufsummierten Produkte aus dem je Betrachtungsintervall ($\Delta T$) auf die Kollektorfläche (6) reflektierten Anteil des Sonnenlichts und einem dem Solarkollektor (2) zugeordneten Ertragswert maximal ist, wobei der Ertragswert der gemessene oder simulierte Mittelwert der lokalen Erträge in dem jeweiligen Betrachtungsintervall am geografischen Ort des Solarkollektors (2) in wenigstens zwei vorhergehenden Jahren ist, und wobei die Größe des zweiten Elevationswinkels ($\gamma$) durch folgende Verfahrensschritte bestimmt wird:

   a) Vorgeben eines Werts ($L_R$) für die Länge des Reflektors (4),
   b) Vorgeben eines jahreszeitlichen Anfangswerts ($T_1$) und Endwerts ($T_N$) sowie der Betrachtungsintervalle ($\Delta T$) für den Betrachtungszeitraum,
   c) Vorgeben eines Anfangswerts ($\gamma_1$) und Endwerts ($\gamma_N$) für den zweiten Elevationswinkels ($\gamma$) und der Intervalle für die Änderung des zweiten Elevationswinkels ($\Delta\gamma$),
   d) Vorgeben eines tageszeitlichen Anfangswertes ($t_1$) und Endwertes ($t_N$) für einen Unterbetrachtungszeitraum und der Unterbetrachtungsintervalle ($\Delta t$),
   e) Vorgeben des mittleren Ertrages ($E_{T1}$) bis ($E_{TN}$) für das jeweilig zugeordnete Betrachtungsintervall ($T_1$) bis ($T_N$),
   f) Bilden der Ertragswerte ($E_{V\gamma1,T1}$) bis ($E_{V\gamma1,TN}$) durch Aufaddieren des für den zweiten Elevationswinkel ($\gamma_1$) vom Reflektor (4) auf den Solarkollektor (2) reflektierten mittleren Anteils des Sonnenlichts in einem jeweiligen Betrachtungsintervall ($T_1$) in Abhängigkeit vom Sonnenstand im Unterbetrachtungszeitraum ($t_1$) bis ($t_N$) und multiplizieren des erhaltenen Werts mit einem diesem Betrachtungsintervall ($T_1$) zugeordneten mittleren Ertrag ($E_{T1}$) für den Solarkollektor (2) in aufeinanderfolgenden Betrachtungsintervallen ($\Delta T$) im Betrachtungszeitraum ($T_1$) bis ($T_N$),
   g) Bilden des Mittelwerts der unter f) ermittelten Werte ($E_{V\gamma1,T1}$) bis ($E_{V\gamma1,TN}$) zu einem dem Anfangswert ($\gamma_1$) zugeordneten Gesamtwert ($E_{VM,\gamma1}$) für den Ertrag im vorgegebenen Betrachtungszeitraum ($T_1$) bis ($T_N$),
   h) Variation des Werts für den zweiten Elevationswinkel ($\gamma$) innerhalb des Anfangs- und Endwertes ($\gamma_1$) bis ($\gamma_N$) um einen vorgegeben Betrag ($\Delta\gamma$) und Ermitteln des diesem Winkelwert ($\gamma_i$) zugeordneten Gesamtwerts ($E_{VM,\gamma i}$) für den Ertrag im vorgegebenen Betrachtungszeitraum ($T_1$) bis ($T_N$) unter Wiederholung der Schritte e) bis g),
   i) Ermitteln des größten Gesamtwerts ($E_{VM,\gamma max}$) für den Ertrag im vorgegebenen Betrachtungszeitraum ($T_1$)

bis ($T_N$) aus den in den Verfahrensschritten g) und h) ermittelten Werten ($E_{VM,\gamma1}$ bis ($E_{VM,\gamma N}$) und des diesem zugeordneten Winkelwerts ($\gamma_{max}$).

2.  Verfahren nach Anspruch 1, **dadurch gekennzeichnet,**
    **dass** das Vorgeben des mittleren Ertrages ($E_{T1}$) bis ($E_{TN}$) am Aufstellungsort des Solarkollektors (2) anhand von Daten bestehender, räumlich naher PV-Anlagen oder, bei Neuinstallationen, mithilfe von marktüblichen Berechnungswerkzeugen und/oder Programmen zum Zeitpunkt des Anfangswerts ($T_1$) bis Endwerts ($T_N$) vorzugsweise in Intervallen von ($\Delta T$) = 1 Tag erfolgt.

3.  Verfahren nach Anspruch 1 oder 2, **dadurch gekennzeichnet,**
    **dass** die relative Erhöhung des vom Solarkollektor (2) im vorgegebenen Betrachtungszeitraum ($T_1$) bis ($T_N$) erzeugten Ertrags auf der Basis des im Verfahrensschritt i) ermittelten größten Gesamtwerts ($E_{VM,\gamma max}$) bestimmt wird.

4.  Verfahren nach einem der vorhergehenden Ansprüche, **dadurch gekennzeichnet,**
    **dass** die Größe des Unterbetrachtungszeitraums ($\Delta t$) eine Stunde ist.

5.  Verfahren nach einem der vorhergehenden Ansprüche, **dadurch gekennzeichnet,**
    **dass** die Größe des Intervalls ($\Delta\gamma$) für den zweiten Elevationswinkels ($\gamma$) 1° beträgt.

6.  Verfahren nach einem der vorhergehenden Ansprüche, **dadurch gekennzeichnet,**
    **dass** entlang der zentralen Längsachse der Kollektorfläche (6) ein um einen ersten Elevationswinkel ($\alpha$) gegenüber der Horizontalen geneigter weiterer Solarkollektor (10) angeordnet ist, wobei der zugewandte untenliegende Seitenrand des Solarkollektors (2) in einem lichten Abstand (a) vom obenliegenden Seitenrand des weiteren Solarkollektors (10) angeordnet ist.

7.  Verfahren nach Anspruch 5, **dadurch gekennzeichnet,**
    **dass** zur Bestimmung des zweiten Elevationswinkels ($\gamma$) zusätzlich die Länge ($L_R$) des Reflektors (4) in vorgegebenen Schritten ($\Delta L_R$) variiert wird, insbesondere in Schritten von 5 Zentimetern.

8.  Verfahren nach Anspruch 6, **dadurch gekennzeichnet,**
    **dass** die Länge des Reflektors ($L_R$) zwischen einer maximalen Länge ($L_{Rmax}$) und einer minimalen Länge ($L_{Rmin}$) des Reflektors (4) in vorzugsweise gleichmäßigen Schritten verändert wird, wobei die maximale Länge ($L_{Rmax}$) des Reflektors (4) und die minimale Länge ($L_{Rmin}$) des Reflektors (4) nach folgender Beziehung ermittelt werden:

$$L_{Rmax} = a - ( L_{Koll} * \sin (\alpha_{Koll}) ) / \tan (\alpha_{S06})$$

oder bei einem an einer Steigung (Hang) angeordneten Solarkollektor (2)

$$L_{Rmax} = a - ( L_{Koll} * \sin (\alpha_{Koll}) - h_S ) / \tan (\alpha_{S06})$$

oder bei einem an einem Gefälle (Hang) angeordneten Solarkollektor (2)

$$L_{Rmax} = a - ( L_{Koll} * \sin (\alpha_{Koll}) + h_G ) / \tan (\alpha_{S06})$$

und

$$L_{Rmin} = a - ( L_{Koll} * \sin (\alpha_{Koll}) ) / \tan (\alpha_{S03})$$

oder bei einem an einer Steigung (Hang) angeordneten Solarkollektor (2)

$$L_{Rmin} = a - ( L_{Koll} * \sin (\alpha_{Koll}) - h_S ) / \tan (\alpha_{S03})$$

oder bei einem an einem Gefälle (Hang) angeordneten Solarkollektor (2)

$$L_{Rmin} = a - ( L_{Koll} * \sin (\alpha_{Koll}) + h_G ) / \tan (\alpha_{S03})$$

worin

$L_{Rmax}$ die maximale Länge des Reflektors (4),
$L_{Rmin}$ die minimale Länge des Reflektors (4),
a der lichte Abstand zwischen den Solarkollektoren (2,10),
$L_{Koll}$ die Länge des Solarkollektors (2) bzw. Modultischs,
$\alpha_{Koll}$ der Elevationswinkel der Kollektorfläche (6),
$\alpha_{S03}$ der größte Höhen- bzw. Zenithwinkel der Sonne bei niedrigster täglicher Kreisbahn am Anfang des Betrachtungszeitraumes am geographischen Aufstellungsort bei dem keine Abschattung eines Solarkollektors (2) oder Reflektors (4) auftritt,
$\alpha_{S06}$ der Winkel der Sonne bei höchstem Sonnenstand, am geographischen Aufstellungsort,
$h_S$ die Höhe, um die der weitere Solarkollektor (10) gegenüber dem zugewandten Rand des Solarkollektors (2) aufgrund einer Steigung erhöht ist und
$h_G$ die Höhe, um die der weitere Solarkollektor (10) dem zugewandten Rand des Solarkollektors (2) aufgrund eines Gefälles erniedrigt ist, bedeuten.

9. Verfahren nach einem der vorhergehenden Ansprüche,
**dadurch gekennzeichnet,**
**dass** der vom Reflektor auf den Solarkollektor (2) reflektierte Anteil des Sonnenlichts für den Betrachtungszeitraum $(T_1)$ bis $(T_N)$ unter Zuhilfenahme eines Sonnenstandmodells ermittelt wird.

## Claims

1. Method for increasing the yield produced by a solar collector (2) over a prescribed observation period ($T_1$ to $T_N$), wherein the solar collector (2) has a collector surface (6) impinged upon by sunlight, which is inclined relative to the horizontal by a first elevation angle ($\alpha$) and rotated relative to the north-south direction (N, S) by an azimuth angle ($\beta$), and wherein a reflector (4) inclined relative to the horizontal by a second elevation angle ($\gamma$) is arranged opposite the collector surface (6) and reflects a portion, dependent on the position of the sun, of the sunlight incident on the reflector (4) onto the collector surface (6), the second elevation angle ($\gamma$) being fixed, **characterized in that** the second elevation angle ($\gamma$) is selected in dependence on the geographical installation location of the solar collector (2) and the size of the first elevation angle ($\alpha$) and the azimuth angle ($\beta$) in such a way that the sum of the products, summed in successive observation intervals over a prescribed observation period ($T_1$) to ($T_N$), of the portion of the sunlight reflected onto the collector surface (6) per observation interval ($\Delta T$) and a yield value assigned to the solar collector (2) is at a maximum, wherein the yield value is the measured or simulated mean value of the local yields in the respective observation interval at the geographical location of the solar collector (2) in at least two previous years, and wherein the size of the second elevation angle ($\gamma$) is determined by the following method steps:

    a) prescribing a value ($L_R$) for the length of the reflector (4),
    b) prescribing a time-of-year initial value ($T_1$) and end value ($T_N$) and also the observation intervals ($\Delta T$) for the observation period,
    c) prescribing an initial value ($\gamma_1$) and end value ($\gamma_N$) for the second elevation angle ($\gamma$) and the intervals for the changing of the second elevation angle ($\Delta\gamma$),
    d) prescribing a time-of-day initial value ($t_1$) and end value ($t_N$) for a sub-observation time period and the sub-observation intervals ($\Delta t$),
    e) prescribing the average yield ($E_{T1}$) to ($E_{TN}$) for the respectively assigned observation interval ($T_1$) to ($T_N$),
    f) forming the yield values ($E_{V_{\gamma 1},T1}$) to ($E_{V_{\gamma 1},TN}$) by adding up the average portion of the sunlight reflected by the reflector (4) onto the solar collector (2) for the second elevation angle ($\gamma_1$) in a respective observation interval ($T_1$) in dependence on the position of the sun in the observation time period ($t_1$) to ($t_N$) and multiplying the value obtained by an average yield ($E_{T1}$) assigned to this observation interval ($T_1$) for the solar collector (2) in successive observation intervals ($\Delta T$) in the observation time period ($T_1$) to ($T_N$),
    g) forming the mean value of the values ($E_{V_{\gamma 1},T1}$) to ($E_{V_{\gamma 1},TN}$) determined under f) to form a total value ($E_{VM,\gamma 1}$),

assigned to the initial value ($\gamma_1$), for the yield in the prescribed observation time period ($T_1$) to ($T_N$),

h) varying the value for the second elevation angle ($\gamma$) within the initial and end values ($\gamma_1$) to ($\gamma_N$) by a prescribed amount ($\Delta\gamma$) and determining the total value ($E_{VM,\gamma i}$), assigned to this angle value ($\gamma_i$), for the yield in the prescribed observation time period ($T_1$) to ($T_N$) by repeating steps e) to g),

i) determining the greatest total value ($E_{VM,\gamma max}$) for the yield in the prescribed observation time period ($T_1$) to ($T_N$) from the values ($E_{VM,\gamma 1}$) to ($E_{VM,\gamma N}$) determined in method steps g) and h) and the angle value ($\gamma_{max}$) assigned to this total value.

2.  Method according to Claim 1,
    **characterized**
    **in that** the prescribing of the average yield ($E_{T1}$) to ($E_{TN}$) at the installation location of the solar collector (2) is performed on the basis of data of existing, spatially nearby PV installations or, in the case of new installations, with the aid of commercially available computation tools and/or programs, at the time of the initial value ($T_1$) to end value ($T_N$), preferably at intervals of ($\Delta$) = 1 day.

3.  Method according to Claim 1 or 2,
    **characterized**
    **in that** the relative increase in the yield produced by the solar collector (2) in the prescribed observation time period ($T_1$) to ($T_N$) is determined on the basis of the greatest total value ($E_{VM,\gamma max}$) determined in method step i).

4.  Method according to one of the preceding claims,
    **characterized**
    **in that** the size of the sub-observation time period ($\Delta t$) is one hour.

5.  Method according to one of the preceding claims,
    **characterized**
    **in that** the size of the interval ($\Delta\gamma$) for the second elevation angle ($\gamma$) is 1°.

6.  Method according to one of the preceding claims,
    **characterized**
    **in that** a further solar collector (10), which is inclined relative to the horizontal by a first elevation angle ($\alpha$), is arranged along the central longitudinal axis of the collector surface (6), wherein the facing lower side edge of the solar collector (2) is arranged at a clear distance (a) from the upper side edge of the further solar collector (10).

7.  Method according to Claim 5,
    **characterized**
    **in that**, for determining the second elevation angle ($\gamma$), the length ($L_R$) of the reflector (4) is additionally varied in prescribed steps ($\Delta L_R$), in particular steps of 5 centimetres.

8.  Method according to Claim 6,
    **characterized**
    **in that** the length of the reflector ($L_R$) is varied between a maximum length ($L_{Rmax}$) and a minimum length ($L_{Rmin}$) of the reflector (4), in preferably uniform steps, wherein the maximum length ($L_{Rmax}$) of the reflector (4) and the minimum length ($L_{Rmin}$) of the reflector (4) are determined according to the following relationship:

$$L_{Rmax} = a-(L_{Koll}*\sin(\alpha_{Koll}))/\tan(\alpha_{S06})$$

or in the case of a solar collector (2) arranged on an upward gradient (slope)

$$L_{Rmax} = a-(L_{Koll}*\sin(\alpha_{Koll})-h_S)/\tan(\alpha_{S06})$$

or in the case of a solar collector (2) arranged on a downward gradient (slope)

$$L_{Rmax} = a-(L_{Koll}*\sin(\alpha_{Koll})+h_G)/\tan(\alpha_{S06})$$

and

$$L_{Rmin} = a-(L_{Koll}*sin(\alpha_{Koll}))/tan(\alpha_{S03})$$

or in the case of a solar collector (2) arranged on an upward gradient (slope)

$$L_{Rmin} = a-(L_{Koll}*sin(\alpha_{Koll})+h_S)/tan(\alpha_{S03})$$

or in the case of a solar collector (2) arranged on a downward gradient (slope)

$$L_{Rmin} = a-(L_{Koll}*sin(\alpha_{Koll})+h_G)/tan(\alpha_{S03})$$

in which

$L_{Rmax}$ is the maximum length of the reflector (4),
$L_{Rmin}$ is the minimum length of the reflector (4),
a is the clear distance between the solar collectors (2, 10),
$L_{Koll}$ is the length of the solar collector (2) or module table,
$\alpha_{Koll}$ is the elevation angle of the collector surface (6),
$\alpha_{S03}$ is the greatest angle of elevation or zenith angle of the sun when it follows its lowest path in the course of a day at the beginning of the observation time period at the geographical installation location when no shading of a solar collector (2) or reflector (4) occurs,
$\alpha_{S06}$ is the angle of the sun when the sun is at its highest point, at the geographical installation location,
$h_S$ is the height by which the further solar collector (10) is raised in relation to the facing edge of the solar collector (2) on account of an upward gradient and
$h_G$ is the height by which the further solar collector (10) is lowered the facing edge of the solar collector (2) on account of a downward gradient.

9. Method according to one of the preceding claims, **characterized in that** the portion of the sunlight reflected by the reflector onto the solar collector (2) for the observation time period $(T_1)$ to $(T_N)$ is determined with the aid of a model of the sun's position.

**Revendications**

1. Procédé pour augmenter le rendement généré par un collecteur solaire (2) sur une période d'observation ($T_1$ à $T_N$) prédéfinie, le collecteur solaire (2) possédant une surface de collecteur (6) exposée à la lumière solaire qui est inclinée d'un premier angle d'élévation ($\alpha$) par rapport à l'horizontale et tournée d'un angle d'azimut ($\beta$) par rapport à la direction Nord-Sud (N, S), et un deuxième réflecteur (4) incliné d'un deuxième angle d'élévation ($\gamma$) par rapport à l'horizontale étant disposé en vis-à-vis de la surface de collecteur (6), lequel réfléchit sur la surface de collecteur (6) une fraction dépendante de la position du Soleil de la lumière solaire incidente sur le réflecteur (4), le deuxième angle d'élévation ($\gamma$) étant réglé à une valeur fixe,
**caractérisé en ce que** le deuxième angle d'élévation ($\gamma$) est choisi en fonction du lieu d'installation géographique du collecteur solaire (2) et de la valeur du premier angle d'élévation ($\alpha$) et de l'angle d'azimut ($\beta$) de manière à ce que la somme des produits, additionnés dans des intervalles d'observation successifs sur une période d'observation ($T_1$) à ($T_N$) prédéfinie, de la fraction de la lumière solaire réfléchie sur la surface de collecteur (6) à chaque intervalle d'observation ($\Delta T$) par une valeur de rendement associée au collecteur solaire (2) est maximale, la valeur de rendement étant la valeur moyenne mesurée ou simulée des rendements locaux dans l'intervalle d'observation respectif au niveau du lieu géographique du collecteur solaire (2) dans au moins deux années précédentes, et la valeur du deuxième angle d'élévation ($\gamma$) étant déterminée par les étapes suivantes :

a) prédéfinition d'une valeur ($L_R$) pour la longueur du réflecteur (4),
b) prédéfinition d'une valeur de début ($T_1$) et d'une valeur de fin ($T_N$) saisonnières de l'intervalle d'observation ($\Delta T$) pour la période d'observation,

c) prédéfinition d'une valeur de début ($\gamma_1$) et d'une valeur de fin ($\gamma_N$) pour le deuxième angle d'élévation ($\gamma$) et de l'intervalle pour la modification du deuxième angle d'élévation ($\Delta\gamma$),

d) prédéfinition d'une valeur de début ($t_1$) et d'une valeur de fin ($t_N$) de moment de la journée pour une sous-période d'observation et le sous-intervalle d'observation ($\Delta t$),

e) prédéfinition du rendement moyen ($E_{T1}$) à ($E_{TN}$) pour l'intervalle d'observation ($T_1$) à ($T_N$) associé,

f) formation des valeurs de rendement ($E_{V\gamma1,T1}$) à ($E_{V\gamma1,TN}$) par addition de la fraction moyenne de la lumière solaire réfléchie par le réflecteur (4) sur le collecteur solaire (2) pour le deuxième angle d'élévation ($\gamma_1$) dans un intervalle d'observation ($T_1$) respectif en fonction de la position du Soleil dans la sous-période d'observation ($t_1$) à ($t_N$) et multiplication de la valeur obtenue par un rendement ($E_{T1}$) moyen associé à cet intervalle d'observation ($T_1$) pour le collecteur solaire (2) dans des intervalles d'observation successifs ($\Delta T$) dans la période d'observation ($T_1$) à ($T_N$),

g) formation de la valeur moyenne des valeurs ($E_{V\gamma1,T1}$) à ($E_{V\gamma1,TN}$) identifiées en f) en vue d'obtenir une valeur totale ($E_{VM,\gamma1}$) associée à la valeur de début ($\gamma_1$) pour le rendement dans la période d'observation ($T_1$) à ($T_N$) prédéfinie,

h) variation de la valeur pour le deuxième angle d'élévation ($\gamma$) à l'intérieur de la plage valeur de début - valeur de fin ($\gamma_1$) à ($\gamma_N$) d'une valeur absolue prédéfinie ($\Delta\gamma$) et identification de la valeur totale ($E_{VM,\gamma i}$) associée à cette valeur angulaire ($\gamma_i$) pour le rendement dans la période d'observation ($T_1$) à ($T_N$) prédéfinie en répétant les étapes e) à g),

i) identification de la valeur totale la plus grande ($E_{VM,\gamma max}$) pour le rendement dans la période d'observation ($T_1$) à ($T_N$) prédéfinie à partir des valeurs ($E_{VM,\gamma1}$) à ($E_{VM,\gamma N}$) identifiées aux étapes g) et h) et de la valeur angulaire ($\gamma_{max}$) qui leur est associée.

2. Procédé selon la revendication 1, caractérisé la prédéfinition du rendement moyen ($E_{T1}$) à ($E_{TN}$) au lieu d'installation du collecteur solaire (2) s'effectue à l'aide de données d'installations PV existantes proches dans l'espace ou, dans le cas des nouvelles installations, à l'aide d'outils de calcul et/ou de programmes courants du marché au moment de la valeur de départ ($T_1$) jusqu'à la valeur de fin ($T_N$), de préférence à intervalles de ($\Delta T$) = 1 jour.

3. Procédé selon la revendication 1 ou 2, **caractérisé en ce que** l'augmentation relative du rendement généré par le collecteur solaire (2) dans la période d'observation ($T_1$) à ($T_N$) prédéfinie est déterminée sur la base de la valeur totale la plus grande ($E_{VM,\gamma max}$) identifiée à l'étape i).

4. Procédé selon l'une des revendications précédentes, **caractérisé en ce que** la taille de la sous-période d'observation ($\Delta t$) est d'une heure.

5. Procédé selon l'une des revendications précédentes, **caractérisé en ce que** la taille de l'intervalle ($\Delta\gamma$) pour le deuxième angle d'élévation ($\gamma$) est de 1°.

6. Procédé selon l'une des revendications précédentes, **caractérisé en ce qu'**un collecteur solaire supplémentaire (10), incliné d'un premier angle d'élévation ($\alpha$) par rapport à l'horizontale, est disposé le long de l'axe longitudinal central de la surface de collecteur (6), dont le bord latéral inférieur du collecteur solaire (2) qui lui fait face se trouvant à une distance libre (a) du bord latéral supérieur du collecteur solaire supplémentaire (10).

7. Procédé selon la revendication 5, **caractérisé en ce que** la longueur ($L_R$) du réflecteur (4) est modulée par pas prédéfinis ($\Delta L_R$), notamment par pas de 5 centimètres, en vue de déterminer le deuxième angle d'élévation ($\gamma$).

8. Procédé selon la revendication 6, **caractérisé en ce que** la longueur ($L_R$) du réflecteur (4) est modifiée entre une longueur minimale ($L_{Rmin}$) et une longueur maximale ($L_{Rmax}$), de préférence par des pas réguliers, la longueur maximale ($L_{Rmax}$) du réflecteur (4) et la longueur minimale ($L_{Rmin}$) du réflecteur (4) étant identifiées selon la relation suivante :

$$L_{Rmax} = a - (L_{Koll} * \sin(\alpha_{Koll}))/\tan(\alpha_{S06})$$

ou dans le cas d'un collecteur solaire (2) disposé au niveau d'une montée (pente)

$$L_{Rmax} = a - (L_{Koll} * \sin(\alpha_{Koll}) - h_S)/\tan(\alpha_{S06})$$

ou dans le cas d'un collecteur solaire (2) disposé au niveau d'une déclivité (pente)

$$L_{Rmax} = a - (L_{Koll} * \sin(\alpha_{Koll}) + h_G) / \tan(\alpha_{S06})$$

et

$$L_{Rmin} = a - (L_{Koll} * \sin(\alpha_{Koll})) / \tan(\alpha_{S03})$$

ou dans le cas d'un collecteur solaire (2) disposé au niveau d'une montée (pente)

$$L_{Rmin} = a - (L_{Koll} * \sin(\alpha_{Koll}) - h_S) / \tan(\alpha_{S03})$$

ou dans le cas d'un collecteur solaire (2) disposé au niveau d'une déclivité (pente)

$$L_{Rmin} = a - (L_{Koll} * \sin(\alpha_{Koll}) + h_G) / \tan(\alpha_{S03})$$

où

$L_{Rmax}$ désigne la longueur maximale du réflecteur (4),
$L_{Rmin}$ désigne la longueur minimale du réflecteur (4),
a désigne la distance libre entre les collecteurs solaires (2, 10),
$L_{Koll}$ désigne la longueur du collecteur solaire (2) ou du plateau de modules,
$\alpha_{Koll}$ désigne l'angle d'élévation de la surface de collecteur (6),
$\alpha_{S03}$ désigne le plus grand angle de hauteur ou de zénith du Soleil avec l'orbite journalière la plus basse au début de la période d'observation au lieu d'installation géographique auquel il ne produit aucun obscurcissement d'un collecteur solaire (2) ou d'un réflecteur (4),
$\alpha_{S06}$ désigne l'angle du Soleil à la position la plus haute du Soleil au lieu d'installation géographique,
$h_S$ désigne la hauteur de laquelle est élevé le collecteur solaire supplémentaire (10) le bord qui lui fait face du collecteur solaire (2) en raison d'une montée et
$h_G$ désigne la hauteur de laquelle est abaissé le collecteur solaire supplémentaire (10) le bord qui lui fait face du collecteur solaire (2) en raison d'une déclivité.

9. Procédé selon l'une des revendications précédentes, **caractérisé en ce que** la fraction de la lumière solaire réfléchie sur le collecteur solaire (2) pour la période d'observation ($T_1$) à ($T_N$) est identifiée à l'aide d'un modèle de position du Soleil.

Fig. 1

EP 3 311 080 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008055871 A1
- EP 0230227 A2
- DE 102009033771 A1
- WO 2011067772 A1
- EP 2075853 A2
- US 4674244 A